# FASCICULE DE BREVET EUROPEEN

(11) **EP 2 321 179 B1**
(45) Date de publication et mention de la délivrance du brevet: **15.01.2014**
(21) Numéro de dépôt: 09737017.5
(22) Date de dépôt: 14.08.2009
(51) Int. Cl.: B64D 15/12, F02C 7/047, H05B 3/26, H05B 3/28

(54) **PROCÉDÉ DE FABRICATION D'UN PANNEAU ACOUSTIQUE D'UNE LÈVRE D'ENTRÉE D'AIR D'UNE NACELLE**
VERFAHREN ZUR HERSTELLUNG EINES AKUSTISCHEN PANELS ZUM EINSATZ IN EINEM TRIEBWERKSEINLAUF
METHOD FOR MAKING AN ACOUSTIC PANEL FOR THE AIR INTAKE LIP OF A NACELLE

(30) Priorité: 03.09.2008 FR 0804823
(43) Date de publication de la demande: 18.05.2011
(73) Titulaire: Aircelle, 76700 Gonfreville l'Orcher (FR)
(72) Inventeur: CARUEL, Pierre, 76600 Le Havre (FR)
(74) Mandataire: Gaillarde, Frédéric F. Ch.
(86) Numéro de dépôt international: PCT/FR2009/001009
(87) Numéro de publication internationale: WO 2010/026305

(56) Documents cités:
- EP-A- 1 826 119
- GB-A- 885 131
- US-A1- 2008 179 448

## Description

L'invention concerne un procédé de fabrication d'un panneau acoustique d'une lèvre d'entrée d'air comportant un dispositif de dégivrage.

L'invention concerne également une nacelle pour un turbomoteur comprenant une telle lèvre d'entrée d'air.

Un avion est propulsé par un ou plusieurs ensembles propulsifs comprenant chacun un turbomoteur logé dans une nacelle sensiblement tubulaire. Chaque ensemble propulsif est rattaché à un aéronef par un mât situé sous une aile ou au niveau du fuselage.

Une nacelle présente généralement une structure comprenant une entrée d'air en amont du moteur et une section médiane apte à entourer une soufflante du turbomoteur, une section aval abritant des moyens d'inversion de poussée et apte à entourer la chambre de combustion du turbomoteur. La nacelle est généralement terminée par une tuyère d'éjection dont la sortie est située en aval du turbomoteur.

L'entrée d'air comprend, d'une part, une lèvre d'entrée adaptée pour permettre la captation optimale vers le turbomoteur de l'air nécessaire à l'alimentation de la soufflante ou des compresseurs internes du turbomoteur, et d'autre part, une structure aval, sur laquelle est rapportée la lèvre, destinée à canaliser convenablement l'air vers les aubes de la soufflante ou des compresseurs. L'ensemble est rattaché en amont d'un carter appartenant à la section amont de la nacelle.

En vol, selon les conditions de température et d'humidité, de la glace peut se former sur la nacelle au niveau de la surface externe de la lèvre d'entrée d'air. Or, la présence de glace ou de givre présente l'inconvénient de modifier les propriétés aérodynamiques de l'entrée d'air et de perturber l'acheminement de l'air vers la soufflante.

Par ailleurs, les turbomoteurs d'aéronef sont générateurs d'une pollution sonore importante. Il existe une forte demande visant à réduire cette pollution, et ce d'autant plus que les turbomoteurs utilisés deviennent de plus en plus puissants.

Afin d'améliorer d'avantage les performances acoustiques des aéronefs, en particulier les aéronefs à turboréacteurs, les nacelles sont dotées de panneaux acoustiques visant à atténuer les bruits générés par le turbomoteur ainsi que les vibrations des structures.

Les panneaux acoustiques sont des structures bien connues pour absorber ces bruits. Ces panneaux comportent habituellement une ou plusieurs couches de structures à âme alvéolaire (structure couramment appelée « en nid d'abeille »). Ces couches sont revêtues sur leur face inférieure, c'est-à-dire non en contact avec le flux d'air à l'intérieur de la nacelle, d'une peau imperméable à l'air, dite « pleine », et sur leur face supérieure, c'est-à-dire en contact avec le flux d'air à l'intérieur de la nacelle, d'une peau externe perforée perméable à l'air, dite « acoustique ».

Une solution pour dégivrer ou empêcher l'accrétion de glace sur la surface externe de la lèvre d'entrée d'air consiste à réchauffer les parois de la lèvre d'entrée d'air par une résistance électrique qui est généralement montée sur ou dans la paroi externe de la lèvre d'entrée d'air du côté du flux d'air froid pénétrant dans la nacelle.

Afin d'augmenter la surface traitée acoustique de l'entrée d'air, il est possible de traiter acoustiquement une partie de la lèvre. Cependant, il faut rendre compatible du traitement acoustique le procédé de dégivrage par résistance électrique ce qui est difficile à réaliser.

Le document EP 1 826 119 décrit à cette fin une lèvre d'entrée d'air comprenant un panneau composite comportant une peau externe sur laquelle est fixée une feuille conductrice en graphite.

Un but de la présente invention est donc de fournir une lèvre d'entrée d'air comprenant un traitement acoustique et de dégivrage efficace tout en étant simple à réaliser.

A cet effet, selon un premier aspect, l'invention a pour objet un procédé de fabrication d'un panneau acoustique d'une lèvre d'entrée d'air d'une nacelle comprenant les étapes où:
A.on réalise une peau externe reproduisant la ligne aérodynamique de la lèvre d'entrée d'air;
B.on fixe une couche conductrice sur ladite peau externe, ladite couche conductrice comportant des éléments conducteurs;
C.on fixe une couche photosensible sur ladite couche conductrice, ladite couche photosensible comportant au moins un élément photosensible;
D.on perce le matériau ainsi formé par un moyen de perçage afin de former des trous acoustiques ;
E.on applique un masque sur la couche photosensible du matériau issu de l'étape D de sorte à former un réseau d'éléments conducteurs n'obstruant pas les trous résultant de l'étape D;
F.on révèle ledit réseau par un procédé de photolithographie;
G.on isole électriquement la surface du réseau issu de l'étape F ;
H.on fixe une structure à âme alvéolaire sur l'ensemble de dégivrage obtenu à l'issu de l'étape G;
I.on applique une deuxième peau sur l'ensemble de dégivrage ainsi obtenu à l'issu de l'étape H formant ainsi un panneau acoustique.

Le procédé selon l'invention permet avantageusement de réaliser simplement et efficacement un panneau acoustique d'une lèvre d'entrée d'air. Le procédé de l'invention présente un nombre d'étapes limitant les opérations manuelles.

Le procédé de l'invention permet de manière avantageuse de positionner précisément les éléments conducteurs par rapport aux trous acoustiques. Ainsi, l'obstruction de tels trous est avantageusement évitée ce qui augmente la performance acoustique du panneau acoustique. De plus, on évite avantageusement de percer les éléments conducteurs chauffants ce qui assure un dégivrage efficace de la lèvre d'entrée d'air.

Selon d'autres caractéristiques de l'invention, la structure de l'invention comporte l'une ou plusieurs des caractéristiques optionnelles suivantes considérées seules ou selon toutes les combinaisons possibles :
- on isole électriquement en déposant une couche d'oxyde ce qui permet d'obtenir un dépôt sélectif sur les éléments conducteurs sans obstruer les trous acoustiques,
- dans l'étape H, on fixe l'ensemble de dégivrage obtenu à l'issu de l'étape G sur la structure à âme alvéolaire par collage,
- la structure à âme alvéolaire est une structure en nid d'abeille,
- la colle est appliquée sur le réseau d'éléments conducteurs en insufflant de l'air comprimé par les trous acoustiques ce qui permet d'éviter que les trous acoustiques soient obstrués par de la colle,
- les éléments conducteurs sont choisis parmi le cuivre, l'aluminium ou un alliage de cuivre et de nickel ce qui permet d'avoir un circuit résistif et donc d'obtenir un bon dégivrage,
- le masque est un film à base de xylène,
- l'on applique la couche conductrice sur un support flexible apte à sensiblement épouser la forme de la peau externe au moins localement ce qui permet au support d'être appliqué sur la peau externe en limitant le nombre de découpes,
- le support comporte des fibres de verre ce qui permet d'améliorer la souplesse de la couche conductrice sur la peau externe et d'isoler électriquement les éléments conducteurs et la peau externe,
- avant l'étape E, on applique une pluralité de moyens de centrage sur le matériau issu de l'étape D pour positionner le masque de manière durable et précise,
- le diamètre des trous acoustiques réalisés à l'étape D est compris entre 0,2 mm et 0,5 mm ce qui permet d'obtenir une surface acoustique optimale,
- l'on applique un treillis métallique sur la peau externe ce qui permet réduire les perlées aérodynamiques induites par la présence de trous acoustiques et d'agmenter le diamètre des trous acoustiques, compris entre 1,5 mm et 2 mm.

Selon un deuxième aspect, l'invention a pour objet une lèvre d'entrée d'air comprenant un panneau acoustique susceptible d'être obtenu par le procédé selon l'invention, comportant une peau externe sur laquelle est fixé un ensemble de dégivrage perforé comprenant au moins un réseau d'éléments conducteurs obtenu par un procédé de photolithographie, ledit élément de dégivrage étant fixé sur une structure à âme alvéolaire.

Selon un autre aspect, l'invention a pour objet une nacelle pour turbomoteur comportant une lèvre d'entrée d'air selon l'invention.

L'invention sera davantage comprise à la lecture de la description non limitative qui va suivre, faite en référence aux figures ci-annexées.
- la figure 1 est une coupe schématique transversale d'une nacelle de l'invention entourant un turbomoteur ;
- la figure 2 est une coupe transversale schématique d'une lèvre d'entrée d'air de l'invention ;
- les figures 3 à 8, 10 et 11 sont des coupes transversales schématiques du panneau acoustique à différentes étapes du procédé selon l'invention ;
- la figure 9 est une vue en perspective du mode de réalisation de la figure 8,
- la figure 12 est une coupe transversale schématique du panneau acoustique obtenu selon une variante du procédé de l'invention.

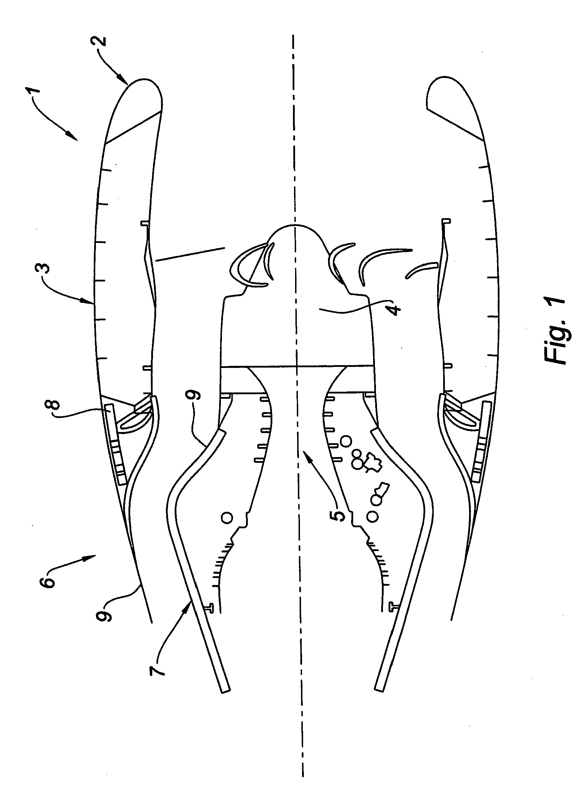

Comme représenté à la figure 1 pour un turboréacteur, une nacelle 1 selon l'invention comprend une lèvre d'entrée d'air 2, une structure médiane 3 entourant une soufflante 4 d'un turbomoteur 5 et un ensemble aval 6. L'ensemble aval 6 est constitué d'une structure interne fixe 7 (IFS) entourant la partie amont du turbomoteur 5, d'une structure externe fixe 8 (OFS) et d'un capot mobile 9 comportant des moyens d'inversion de poussée.

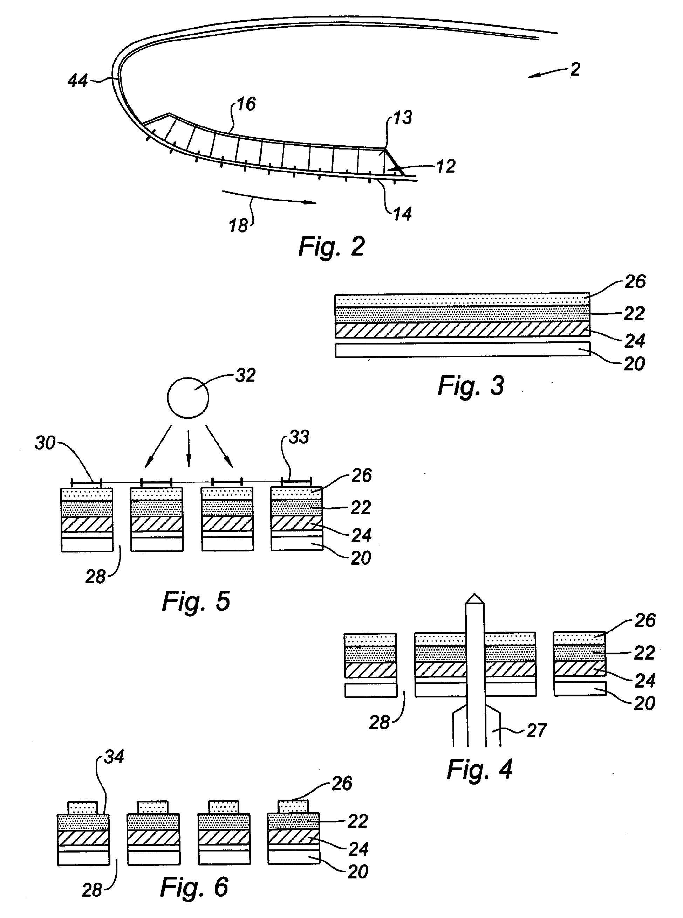

Comme représenté sur la figure 2, la lèvre d'entrée d'air 2 de l'invention comporte dans certaines zones un panneau acoustique 12 afin d'absorber les nuisances sonores dues au fonctionnement du turbomoteur 5. Le panneau acoustique 12 comporte une structure en nid d'abeille 13 sur laquelle est fixée un ensemble de dégivrage 14 perforé et une peau interne 16 pleine. L'ensemble de dégivrage 14 est en contact avec le flux d'air froid 18 ce qui n'est pas le cas de la peau interne 16.

Le panneau acoustique 12 est obtenu selon le procédé de l'invention comprenant les étapes où :
A. on réalise une peau externe reproduisant la ligne aérodynamique de la lèvre d'entrée d'air;
B. on fixe une couche conductrice sur ladite peau externe, ladite couche conductrice comportant des éléments conducteurs ;
C. on fixe une couche photosensible sur ladite couche conductrice, ladite couche photosensible comportant au moins un élément photosensible;
D. on perce le matériau ainsi formé par un moyen de perçage afin de former des trous acoustiques;
E. on applique un masque sur la couche photosensible du matériau issu de l'étape D de sorte à former un réseau d'éléments conducteurs n'obstruant pas les trous résultant de l'étape D;
F. on révèle ledit réseau par un procédé de photolithographie;
G. on isole électriquement la surface du réseau issu de l'étape F ;
H. on fixe une structure à âme alvéolaire sur l'ensemble de dégivrage obtenu à l'issu de l'étape G;
I. on applique une deuxième peau sur l'ensemble de dégivrage ainsi obtenu à l'issu de l'étape H formant ainsi un panneau acoustique.

Le procédé selon l'invention permet avantageusement de réaliser plus simplement et efficacement un panneau acoustique dégivrable électriquement en limitant le nombre d'opérations manuelles. En effet, le perçage des trous acoustiques dans l'ensemble de dégivrage est effectué avant que le réseau d'éléments conducteurs ne soit formé. Ainsi le procédé selon l'invention permet avantageusement un gain de temps pour la fabrication de panneaux acoustiques. Il permet également d'éviter que les trous acoustiques ne soient obstrués par le réseau d'éléments conducteurs ou de percer ce dernier.

Le procédé selon l'invention permet également d'obtenir toute géométrie de réseau d'éléments conducteurs connue de l'homme du métier, en particulier des associations d'éléments conducteurs disposés en série et en parallèle permettant une tolérance à l'endommagement de certaines des parties conductrices du réseau. La géométrie peut donc être déterminée en fonction de la répartition des trous acoustiques de sorte que le réseau soit le plus efficace possible tout en optimisant la performance acoustique du panneau acoustique. Typiquement, le procédé de l'invention permet d'obtenir un espacement entre les branches du réseau et un écartement avec les trous acoustiques de l'ordre de 0,3 mm.

Dans l'étape A du procédé selon l'invention, on réalise une peau externe 20 reproduisant la ligne aérodynamique de la lèvre d'entrée d'air 2 (voir figure 3). Une telle réalisation peut être effectuée par tout moyen connu de l'homme du métier.

De manière avantageuse, le procédé selon l'invention permet d'obtenir un panneau acoustique 12 dans lequel l'ensemble de dégivrage 14 suit sensiblement le profil de la lève d'entrée d'air 2.

La peau externe 20 peut être réalisée par formage d'une tôle, par exemple aluminium ou titane. Selon une variante, la peau externe 20 peut être obtenue par drapage de plis de tissus ou de fibres unidirectionnelles de carbone et/ou de verre ou de tout matériau composite convenant à la mise en oeuvre de l'invention par tout procédé connu de l'homme du métier.

La peau externe 20 peut également être revêtue d'un élément de protection, par exemple de type peinture ou grillage en bronze.

Comme représenté à la figure 3, dans l'étape B du procédé de l'invention, on fixe une couche conductrice 22 sur ladite peau externe 20, ladite couche conductrice 22 comportant des éléments conducteurs.

La couche conductrice 22 est disposée sur la face de la peau externe 20 de sorte à être en contact avec la structure à âme alvéolaire 13. L'autre face de la peau externe 20 est destinée à être en contact avec le flux d'air froid 18. La couche conductrice 22 peut en outre être associée à un substrat de fibre de verre, obtenu à partir de plaques planes, et découpées de façon à pouvoir être appliquée localement sur la lèvre d'entrée d'air 2, malgré une forme non développable.

Les éléments conducteurs sont préférentiellement choisis parmi le cuivre, l'aluminium et/ou un alliage de cuivre et de nickel. De tels éléments conducteurs permettent avantageusement de dégager de la chaleur par passage de courant électrique. A cet effet, la couche conductrice 22 est reliée à une source du courant par tout moyen connu de l'homme du métier. La connexion électrique de la couche conductrice 22 peut être réalisée en dehors du panneau acoustique 12 en étendant la couche conductrice 22 à l'endroit souhaité. Les câbles d'alimentation peuvent être par exemple soudés directement sur la couche conductrice 22 ou connectés à des bornes.

La couche conductrice 22 est mise directement sur la peau externe 20 ou appliquée, au préalable, sur un support plan et flexible 24. Le support flexible 24 peut être constitué de fibres de verre, notamment de tissus de fibres de verre dont le nombre de plis est compris entre 1 et 3.

De manière préférée, le support 24 est flexible et apte à sensiblement épouser la forme de la peau externe 20 au moins localement voire sur toute la surface. Un tel support 24 permet avantageusement de limiter le nombre de découpes à réaliser dans le matériau constitué de la couche conductrice 22 et du support 24 afin d'épouser la forme de la peau externe 20. Ainsi, on limite de manière avantageuse le nombre d'étapes de fabrication de l'ensemble de dégivrage. En effet, comme la lèvre d'entrée d'air 2 présente une forme non développable et dans le cas où la couche conductrice 22 est réalisée à partir de plaques planes, il est nécessaire de découper le support 24 à la façon d'un peigne, de sorte à pouvoir courber l'ensemble pour épouser la forme de la peau externe 20.

Le substrat 24 est fixé à la couche conductrice 22 par tout moyen connu de l'homme du métier, notamment par collage.

Dans l'étape C du procédé de l'invention, on fixe une couche photosensible 26 sur ladite couche conductrice 22, ladite couche photosensible 26 comportant au moins un élément photosensible, notamment de la résine photosensible. La couche photosensible 26 peut être déjà présente dans le cas de réalisation à partir d'un substrat obtenu à partir de plaques planes.

Comme représenté à la figure 4, dans l'étape D du procédé de l'invention, on perce le matériau ainsi formé par un moyen de perçage 27 afin de former des trous acoustiques 28.

Le moyen de perçage 27 est tout moyen adapté et connu de l'homme du métier pour former des trous acoustiques 28. Les trous acoustiques 28 ont typiquement un diamètre compris entre 0,1 mm et 0,8 mm, préférentiellement entre 0,2 mm et 0,5mm. Un tel diamètre de trous acoustiques 28 permet d'obtenir une surface acoustique optimale pour le panneau acoustique 12.

A titre d'exemple, on peut citer comme moyen de perçage 27, une perceuse mécanique multibroches, un laser ou un jet d'eau. Le perçage du matériau issu des étapes A, B et C peut être effectué par l'intérieur ou l'extérieur dudit matériau, à savoir par la face de la couche photosensible 26 ou par la face de la peau externe 20.

Comme représenté à la figure 5, dans l'étape E du procédé de l'invention, on applique un masque 30 sur la couche photosensible 26 du matériau issu de l'étape D de sorte à former un réseau d'éléments conducteurs n'obstruant pas les trous 28 résultant de l'étape D.

A titre d'exemple, le masque 30 peut être choisi parmi tout matériau transparent adapté et connu de l'homme du métier. De manière préférentielle, le masque 30 est un film à base de xylène, par exemple de mylar®.

Selon une variante préférée, avant l'étape E du procédé de l'invention, on applique une pluralité de moyens de centrage (non représentés) sur le matériau issu de l'étape D pour positionner le masque 30 de manière durable et précise. Ainsi, le motif du réseau d'éléments conducteurs est réalisé de manière précise afin d'éviter aux éléments conducteurs d'interférer avec les trous 28.

Il est possible d'ajuster la portion du masque 30 manuellement afin de parfaire la position du réseau d'éléments conducteurs par rapport aux trous 28.

Le placement du masque 30 peut être facilité, par exemple, en perçant à la main pour chaque masque 30 appliqué sur le matériau issu de l'étape D, un ou plusieurs trous de référence (non représenté), permettant ainsi de positionner un ou plusieurs moyens de centrage. Le ou les trous de référence peuvent coïncider avec un trou acoustique 32.

Le moyen de centrage peut ensuite être enlevé lorsqu'il n'est plus nécessaire. Le trou de référence est alors obstrué par tout moyen adapté et connu de l'homme du métier, afin de préserver la surface acoustique. Il est également possible de ne pas obstruer les trous de référence.

Dans l'étape F du procédé de l'invention, on révèle le réseau d'éléments conducteurs par un procédé de photolithographie.

On insole tout d'abord le matériau issu de l'étape E, par tout moyen 32 adapté et connu de l'homme du métier. A titre d'exemple, on peut citer un ensemble de sources d'ultraviolet.

La couche photosensible 26 protégée par le motif 33 dessiné sur le masque 30 n'est pas obscurcie par le rayonnement UV ce qui permet d'imprimer le motif sur ladite couche 26. La couche photosensible 26 non protégée est, quant à elle, obscurcie.

L'insolation dure typiquement environ quelques minutes. En effet, la durée de l'exposition de la couche photosensible 26 doit être suffisamment longue pour que le motif 33 soit imprimé sur la dite couche photosensible 26 mais suffisamment courte pour éviter que les rayons UV ne traversent toute la superficie du masque 30, effaçant alors tout motif.

La couche photosensible 26 non protégée est ensuite éliminée par tout produit révélateur adapté et connu de l'homme du métier. A titre d'exemple, on peut citer la soude caustique.

De ce fait, comme représenté à la figure 6, la couche photosensible restante 26 reproduit le motif du réseau désiré.

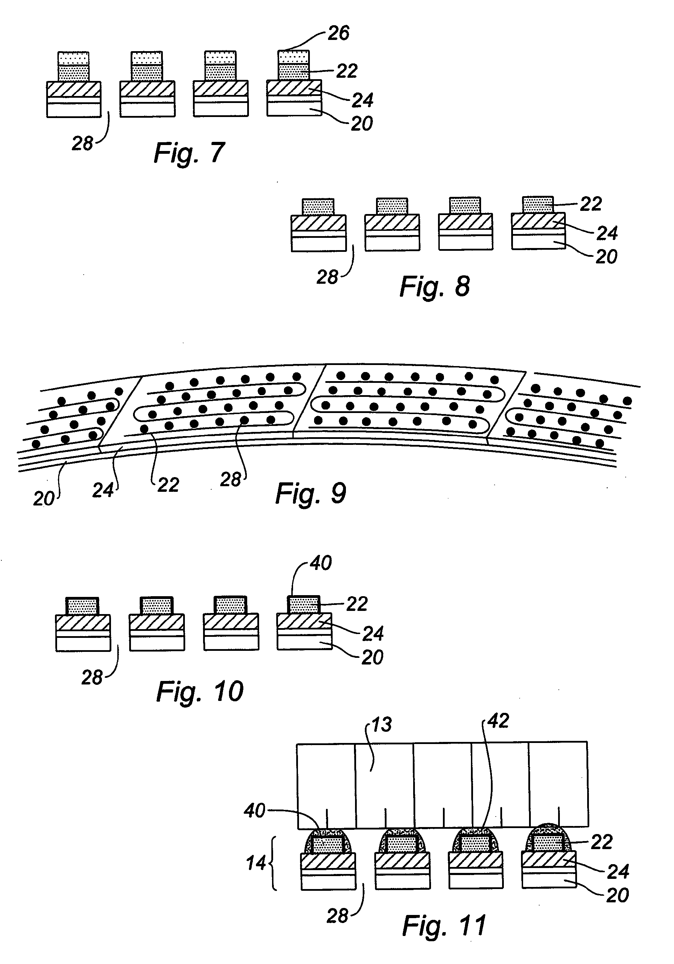

On applique ensuite tout produit chimique adapté et connu de l'homme du métier afin d'éliminer la partie 34 de la couche conductrice non située en-dessous de la couche photosensible 26 restante. Ainsi, comme représenté à la figure 7, il ne reste que la partie de la couche conductrice 22 située en-dessous du motif formé par la couche photosensible 26.

La couche photosensible 26 restante est alors éliminée par tout produit chimique adapté et connu de l'homme du métier de sorte que la couche conductrice 22 révèle le motif du réseau d'éléments conducteurs (voir figures 8 et 9).

Dans l'étape G du procédé de l'invention, on isole électriquement la surface du réseau issu de l'étape F (voir la figure 10). L'isolation électrique permet en général d'isoler thermiquement le réseau issu de l'étape F.

Les éléments conducteurs de la couche conductrice 22 sont généralement sensibles à l'oxydation. De ce fait, ils nécessitent d'être protégés.

De manière préférée, on isole électriquement en déposant une couche d'oxyde de manière précise ce qui permet d'obtenir un dépôt sélectif sur le réseau et donc sur les éléments conducteurs sans obstruer les trous acoustiques 28. A titre d'exemple, on peut déposer par électrolyse lorsque le réseau est en aluminium. La couche d'aluminium peut être déposée par anodisation.

L'épaisseur de la couche d'oxyde est de comprise entre 1 µm et 0,05 mm, notamment de 0,01 mm.

A titre d'exemple, l'oxyde employé peut être de l'oxyde d'aluminium si les éléments conducteurs sont en aluminium ce qui permet d'obtenir une isolation optimale.

La protection peut également être réalisée par dépôt de tout matériau protecteur comme du vernis, en protégeant initialement et sélectivement les trous de référence et acoustiques par l'application d'une couche d'éléments photosensibles, par le même procédé de photolithographie que décrit précédemment. Le procédé ainsi décrit permet de protéger l'ensemble des éléments conducteurs sans obturer les trous de référence et acoustiques.

Comme représenté à la figure 11, dans l'étape H du procédé de l'invention, on fixe une structure à âme alvéolaire 13 sur l'ensemble de dégivrage 14 obtenu à l'issu de l'étape G. Préférentiellement; la structure à âme alvéolaire 13 est une structure en nid d'abeille.

La fixation peut être réalisée par tout moyen connu de l'homme du métier, mais préférentiellement par collage.

Selon un premier mode de réalisation, un film de colle est appliqué sur les arêtes des nids d'abeille de façon à réaliser l'adhésion de la structure nid d'abeille 13 et de l'ensemble de dégivrage 14 issu de l'étape G, et également d'améliorer l'isolation électrique et thermique des éléments conducteurs.

Selon une variante préférée représentée à la figure 11, la colle 42 est appliquée sur le réseau d'éléments conducteurs en insufflant de l'air comprimé par les trous acoustiques 28 dans le cas où ils présentent un diamètre suffisant pour permettre un débit suffisant d'air insufflé. Ainsi, on évite avantageusement que les trous acoustiques 28 soient obstrués par la colle 42. A titre d'exemple, on peut utiliser une colle à base époxy de type Redux 322®.

Dans l'étape I du procédé de l'invention, on applique une deuxième peau 16 sur l'ensemble de dégivrage ainsi obtenu à l'issu de l'étape H formant ainsi le panneau acoustique 12.

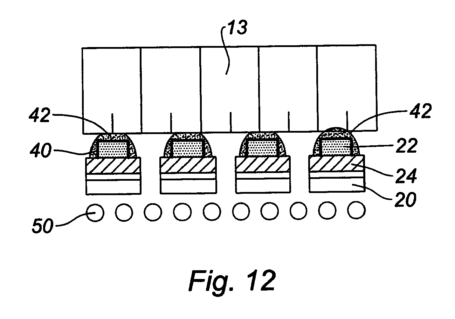

Selon un mode de réalisation préférentiel représenté à la figure 12, on applique un treillis métallique 50, notamment par collage, sur la peau externe 20. Le treillis 50 est destiné à réduire les pertes aérodynamiques par interaction de l'écoulement extérieur avec les trous acoustiques 28. De manière avantageuse, il est possible de percer des trous acoustiques 28 de diamètre compris entre 1,3 mm et 2,2 mm, préférentiellement entre 1,5 mm et 2 mm sans engendrer de pénalités aérodynamiques. Le treillis métallique 50 présente également l'avantage de protéger la lèvre d'entrée d'air 2 contre les impacts de foudre.

Dans la partie 44 de la lèvre d'entrée d'air non traitée acoustique ne comportant pas de structure en nid d'abeille 13, un simple matériau isolant et protecteur peut être optionnellement fixé par tout moyen connu de l'homme du métier sur l'ensemble de dégivrage 14 (voir figure 2). A titre d'exemple, il est possible d'utiliser comme matériau une peau composite pour avoir une bonne tenue structurale.

Il est possible de cuire le panneau acoustique 12 issu de l'étape I à une température, typiquement comprise entre 170°C et 180°C, voire égale à environ 175°C afin de solidariser le panneau acoustique 12.

## Revendications

1. Procédé de fabrication d'un panneau acoustique (12) d'une lèvre d'entrée d'air (2) d'une nacelle (1) comprenant les étapes où:
A. on réalise une peau externe (20) reproduisant la ligne aérodynamique de la lèvre d'entrée d'air (2);
B. on fixe une couche conductrice (22) sur ladite peau externe (20), ladite couche conductrice (22) comportant des éléments conducteurs;
C. on fixe une couche photosensible (26) sur ladite couche conductrice (22), ladite couche photosensible (26) comportant au moins un élément photosensible;
D. on perce le matériau ainsi formé par un moyen de perçage (27) afin de former des trous acoustiques (28);
E. on applique un masque (30) sur la couche photosensible (26) du matériau issu de l'étape D de sorte à former un réseau d'éléments conducteurs n'obstruant pas les trous (28) résultant de l'étape D;
F. on révèle ledit réseau par un procédé de photolithographie;
G. on isole électriquement la surface du réseau issu de l'étape F ;
H. on fixe une structure à âme alvéolaire (13) sur l'ensemble de dégivrage (14) obtenu à l'issu de l'étape G;
I. on applique une deuxième peau (16) sur l'ensemble de dégivrage (14) ainsi obtenu à l'issu de l'étape H formant ainsi un panneau acoustique (12).

2. Procédé selon la revendication précédente, **caractérisé en ce que**, dans l'étape G, on isole électriquement en déposant une couche d'oxyde (40).

3. Procédé selon l'une quelconque des revendications précédentes, **caractérisé en ce que**, dans l'étape H, on fixe l'ensemble de dégivrage (14) obtenu à l'issu de l'étape G sur la structure à âme alvéolaire (13) par collage.

4. Procédé selon l'une quelconque des revendications précédentes, **caractérisé en ce que** la structure à âme alvéolaire (13) est une structure en nid d'abeille.

5. Procédé selon l'une quelconque des revendications précédentes, **caractérisé en ce que** la colle est appliquée sur le réseau d'éléments conducteurs en insufflant de l'air comprimé par les trous acoustiques (28).

6. Procédé selon l'une quelconque des revendications précédentes, **caractérisé en ce que** les éléments conducteurs sont choisis parmi le cuivre, l'aluminium ou un alliage de cuivre et de nickel.

7. Procédé selon l'une quelconque des revendications précédentes, **caractérisé en ce que** le masque (30) est un film à base de xylène.

8. Procédé selon l'une quelconque des revendications précédentes, **caractérisé en ce que** l'on applique la couche conductrice (22) sur un support (24) flexible apte à sensiblement épouser la forme de la peau externe (20) au moins localement.

9. Procédé selon la revendication précédente, **caractérisé en ce que** le support (24) comporte des fibres de verre.

10. Procédé selon l'une quelconque des revendications précédentes, **caractérisé en ce qu'**avant l'étape E, on applique une pluralité de moyens de centrage sur le matériau issu de l'étape D pour positionner le masque (30).

11. Procédé selon l'une quelconque des revendications précédentes, **caractérisé en ce que** le diamètre des trous acoustiques (28) réalisés à l'étape D est compris entre 0,2 mm et 0,5 mm.

12. Procédé selon l'une quelconque des revendications précédentes, **caractérisé en ce qu'**on applique un treillis métallique (50) sur la peau externe (20).

13. Procédé selon l'une quelconque des revendications 1 à 10, **caractérisé en ce que** le diamètre des trous acoustiques (28) réalisés à l'étape D est compris entre 1,5 mm et 2 mm.

14. Lèvre d'entrée d'air (2) de nacelle comprenant un panneau acoustique (12) obtenu par le procédé selon l'une quelconque des revendications 1 à 13, comportant une peau externe (20) sur laquelle est fixé un ensemble de dégivrage (14) perforé comprenant au moins un réseau d'éléments conducteurs obtenu par un procédé de photolithographie, ledit élément de dégivrage (14) étant fixé sur une structure à âme alvéolaire (13).

15. Nacelle (1) pour turbomoteur comportant une lèvre d'entrée d'air (2) selon la revendication précédente.

## Patentansprüche

1. Herstellungsverfahren einer Akustikplatte (12) einer Lufteingangslippe (2) einer Gondel (1), das die folgenden Schritte umfasst:
A. Herstellung einer Außenhaut (20), die die aerodynamische Linie der Lufteingangslippe (2) reproduziert,
B. Befestigung einer leitenden Schicht (22) auf der Außenhaut (20), wobei die leitende Schicht (22) leitende Elemente aufweist,
C. Befestigung einer lichtempfindlichen Schicht (26) auf der leitenden Schicht (22), wobei die lichtempfindliche Schicht (26) mindestens ein lichtempfindliches Element aufweist,
D. Durchbohren des derart gebildeten Materials mit einem Bohrmittel (27), um Akustiklöcher (28) zu bilden,
E. Aufbringen einer Maske (30) auf der lichtempfindlichen Schicht (26) des Materials aus Schritt D derart, dass ein Netzwerk leitender Elemente gebildet wird, das nicht die Löcher (28) aus Schritt D verdeckt,
F. Sichtbarmachen des Netzwerks durch ein Fotolitographieverfahren,
G. elektrische Isolierung der Oberfläche des Netzwerks aus Schritt F,
H. Befestigung einer Struktur mit zelligem Kern (13) auf der Enteisungsgruppe (14) aus Schritt G,
I. Aufbringen einer zweiten Haut (16) auf die Enteisungsgruppe (14) aus Schritt H, wodurch nunmehr eine Akustikplatte (12) gebildet wird.

2. Verfahren nach vorangehendem Anspruch, **dadurch gekennzeichnet, dass** in Schritt G durch Aufbringen einer Oxidschicht (40) elektrisch isoliert wird.

3. Verfahren nach einem der vorangehenden Ansprüche, **dadurch gekennzeichnet, dass** in Schritt H die Enteisungsgruppe (14) aus Schritt G auf der Struktur mit zelligem Kern (13) durch Kleben befestigt wird.

4. Verfahren nach einem der vorangehenden Ansprüche, **dadurch gekennzeichnet, dass** die Struktur mit zell igem Kern (13) eine Bienenwabenstruktur ist.

5. Verfahren nach einem der vorangehenden Ansprüche, **dadurch gekennzeichnet, dass** der Kleber auf das Netzwerk leitender Elemente durch Einblasen von Druckluft durch die Akustiklöcher (28) aufgebracht wird.

6. Verfahren nach einem der vorangehenden Ansprüche, **dadurch gekennzeichnet, dass** die leitenden Elemente aus dem Kupfer, dem Aluminium oder einer Kupfer-Nickel-Legierung ausgewählt sind.

7. Verfahren nach einem der vorangehenden Ansprüche, **dadurch gekennzeichnet, dass** die Maske (30) eine Folie auf Xylenbasis ist.

8. Verfahren nach einem der vorangehenden Ansprüche, **dadurch gekennzeichnet, dass** die leitende Schicht (22) auf eine flexible Unterlage (24) aufgebracht wird, die imstande ist, mindestens lokal etwa die Form der Außenhaut (20) anzunehmen.

9. Verfahren nach vorangehendem Anspruch, **dadurch gekennzeichnet, dass** die Unterlage (24) Glasfasern aufweist.

10. Verfahren nach einem der vorangehenden Ansprüche, **dadurch gekennzeichnet, dass** vor dem Schritt E eine Vielzahl von Zentriermitteln auf das Material aus Schritt D aufgebracht wird, um die Maske (30) zu positionieren.

11. Verfahren nach einem der vorangehenden Ansprüche, **dadurch gekennzeichnet, dass** der Durchmesser der Akustiklöcher (28), die in Schritt D hergestellt werden, zwischen 0,2 mm und 0,5 mm inklusive ist.

12. Verfahren nach einem der vorangehenden Ansprüche, **dadurch gekennzeichnet, dass** auf die Außenhaut (20) ein Metallgeflecht aufgebracht wird.

13. Verfahren nach einem der Ansprüche 1 bis 1 0, **dadurch gekennzeichnet, dass** der Durchmesser der Akustiklöcher (28), die in Schritt D hergestellt werden, zwischen 1,5 mm und 2 mm inklusive ist.

14. Lufteingangslippe (2) einer Gondel, die eine Akustikplatte (12) umfasst, die durch das Verfahren nach einem der Ansprüche 1 bis 13 hergestellt ist, die eine Außenhaut (20) aufweist, auf der eine perforierte Enteisungsgruppe (14) befestigt ist, die mindestens ein Netzwerk leitender Elemente umfasst, das durch ein Fotolitographieverfahren hergestellt wird, wobei das Enteisungselement (14) auf einer Struktur mit zelligem Kern (13) befestigt ist.

15. Gondel (1) für einen Turbomotor, die eine Lufteingangslippe (2) nach vorangehendem Anspruch aufweist.

## Claims

1. A method for manufacturing an acoustic panel (12) of an air intake lip (2) of a nacelle (1), comprising the following steps:
A. producing an outer skin (20) reproducing the aerodynamic line of the air intake lip (2);
B. fastening a conductive layer (22) on said outer skin (20), said conductive layer (22) including conductive elements;
C. fastening a photosensitive layer (26) on said conductive layer (22), said photosensitive layer (26) including at least one photosensitive element;
D. piercing the material thus formed using piercing means (27) so as to form acoustic holes (28);
E. applying the mask (30) on the photosensitive layer (26) of the material resulting from step D so as to form a network of conductive elements not obstructing the holes (28) resulting from step D;
F. exposing said network using a photolithography method;
G. electrically insulating the surface of the network resulting from step F;
H. fastening a cellular core structure (13) on the deicing assembly (14) obtained at the end of step G;
I. applying a second skin (16) on the deicing assembly (14) thus obtained at the end of step H, thereby forming an acoustic panel (12).

2. The method according to the preceding claim, **characterized in that**, in step G, electrical insulation is done by depositing an oxide layer (40).

3. The method according to any one of the preceding claims, **characterized in that**, in step H, the deicing assembly (14) obtained at the end of step G is fastened on the cellular core structure (13) by gluing.

4. The method according to any one of the preceding claims, **characterized in that** the cellular core structure (13) is a honeycomb structure.

5. The method according to any one of the preceding claims, **characterized in that** the glue is applied on the network of conductive elements by blowing compressed air through the acoustic holes (28).

6. The method according to any one of the preceding claims, **characterized in that** the conductive elements are chosen from among copper, aluminum, or an alloy of copper and nickel.

7. The method according to any one of the preceding claims, **characterized in that** the mask (30) is a xylene-based film.

8. The method according to any one of the preceding claims, **characterized in that** the conductive layer (22) is applied on a flexible substrate (24) capable of substantially hugging the shape of the outer skin (20), at least locally.

9. The method according to the preceding claim, **characterized in that** the substrate (24) includes glass fibers.

10. The method according to any one of the preceding claims, **characterized in that** before step E, multiple centering means are applied on the material resulting from step D to position the mask (30).

11. The method according to any one of the preceding claims, **characterized in that** the diameter of the acoustic holes (28) made in step D is comprised between 0.2 mm and 0.5 mm.

12. The method according to any one of the preceding claims, **characterized in that** a metal truss (50) is applied on the outer skin (20).

13. The method according to any one of claims 1 to 10, **characterized in that** the diameter of the acoustic holes (28) made in step D is comprised between 1.5 mm and 2 mm.

14. An air intake lip (2) for a nacelle comprising an acoustic panel (12) obtained using the method according to any one of claims 1 to 13, including a perforated outer skin (20) on which a deicing assembly (14) is fastened comprising at least one network of conductive elements obtained using a photolithography method, said deicing element (14) being fastened on the cellular core structure (13).

15. A turbojet engine nacelle (1) including an air intake lip (2) according to the preceding claim.
